(19) Europäisches Patentamt / European Patent Office / Office européen des brevets

(11) **EP 3 768 448 B1**

(12) **EUROPÄISCHE PATENTSCHRIFT**

(45) Veröffentlichungstag und Bekanntmachung des Hinweises auf die Patenterteilung:
**19.11.2025   Patentblatt 2025/47**

(21) Anmeldenummer: **19729674.2**

(22) Anmeldetag: **03.06.2019**

(51) Internationale Patentklassifikation (IPC):
*G05B 19/4099* (2006.01)   *B33Y 50/00* (2015.01)
*B33Y 50/02* (2015.01)   *B22F 10/36* (2021.01)
*B22F 10/85* (2021.01)   *B29C 64/393* (2017.01)
*B29C 64/153* (2017.01)

(52) Gemeinsame Patentklassifikation (CPC):
**G05B 19/4099; B22F 10/36; B22F 10/85; B29C 64/153; B29C 64/393; B33Y 50/00; B33Y 50/02;** B22F 10/28; B22F 10/47; B22F 12/49; B22F 12/67; B22F 12/90; G05B 2219/49013; Y02P 10/25

(86) Internationale Anmeldenummer:
**PCT/EP2019/064263**

(87) Internationale Veröffentlichungsnummer:
**WO 2019/238440 (19.12.2019 Gazette 2019/51)**

(54) **VERFAHREN ZUM BESTIMMEN VON BAUVORSCHRIFTEN FÜR EIN ADDITIVES FERTIGUNGSVERFAHREN, VERFAHREN ZUM ERSTELLEN EINER DATENBANK MIT KORREKTURMASSNAHMEN FÜR DIE PROZESSFÜHRUNG EINES ADDITIVEN FERTIGUNGSVERFAHRENS UND EIN COMPUTER-PROGRAMMPRODUKT**

METHOD FOR DETERMINING BUILDING REGULATIONS FOR AN ADDITIVE PRODUCTION METHOD, METHOD FOR CREATING A DATABASE WITH CORRECTIVE MEASURES FOR THE MANAGEMENT OF AN ADDITIVES PRODUCTION PROCESS, STORAGE FORMAT FOR BUILDING INSTRUCTIONS AND A COMPUTER PROGRAM PRODUCT

PROCÉDÉ DE DÉTERMINATION DE RÈGLES DE CONSTRUCTION POUR UN PROCÉDÉ DE FABRICATION ADDITIVE, PROCÉDÉ DE CRÉATION D'UNE BANQUE DE DONNÉES À MESURES CORRECTRICES POUR LA COMMANDE DE PROCESSUS D'UN PROCÉDÉ DE PRODUCTION ADDITIVE, FORMAT D'ENREGISTREMENT POUR INSTRUCTIONS DE CONSTRUCTION ET PRODUIT_PROGRAMME INFORMATIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.06.2018   EP 18177250**

(43) Veröffentlichungstag der Anmeldung:
**27.01.2021   Patentblatt 2021/04**

(73) Patentinhaber: **Siemens Aktiengesellschaft**
**80333 München (DE)**

(72) Erfinder:
- **HEINRICHSDORFF, Frank**
  **14513 Teltow (DE)**
- **KASTSIAN, Darya**
  **14612 Falkensee (DE)**
- **KRÜGER, Ursus**
  **14089 Berlin (DE)**
- **NEUBERT, Heinz**
  **73095 Albershausen (DE)**
- **REZNIK, Daniel**
  **13503 Berlin (DE)**

(74) Vertreter: **Siemens Patent Attorneys**
**Postfach 22 16 34**
**80506 München (DE)**

(56) Entgegenhaltungen:
**WO-A1-2017/174160**

**Beschreibung**

Verfahren zum Bestimmen von eine Prozessführung beschreibenden Bauvorschriften zur additiven Herstellung einer Baustruktur und ein Computerprogrammprodukt.

Die Erfindung betrifft ein Verfahren zum Bestimmen von eine Prozessführung beschreibenden Bauvorschriften zur additiven Herstellung einer Baustruktur auf der Grundlage einer Simulation der Herstellung der Baustruktur. Dabei werden für die Simulation folgende Schritte durchlaufen. Ein Fertigungsdatensatz für die Baustruktur, der die Baustruktur in herzustellenden Lagen beschreibt, wird zur Verfügung gestellt. Eine globale Wärmeentwicklung in den bereits hergestellten Lagen der Baustruktur unter Berücksichtigung einer Bauhistorie der Baustruktur und des Wärmeeintrags durch einen Energiestrahl wird berechnet. Die lokale Wärmeentwicklung in der Umgebung des Wärmeeintrags durch den Energiestrahl wird bestimmt. Die Prozessführung wird unter Berücksichtigung der globalen Wärmeentwicklung und der lokalen Wärmeentwicklung bestimmt.

Als Bauvorschriften sollen Daten verstanden werden, welche einer Maschine zum additiven Herstellen der Baustruktur zur Verfügung gestellt werden. Hierzu gehören die Prozessparameter für den Energiestrahl (beispielsweise einen Laserstrahl) sowie die Definition eines Werkzeugpfads. Als Werkzeug im fertigungstechnischen Sinne kommt der Energiestrahl zum Einsatz, so dass der Werkzeugpfad dem Bestrahlungspfad des Energiestrahls entspricht. Der Werkzeugpfad besteht üblicherweise aus einer Vielzahl von aneinander gereihten Vektoren, die durch den Energiestrahl abgefahren werden. Die Bauschriften definieren damit eine Prozessführung, die durch die Maschine zum additiven Herstellen abgearbeitet wird.

Weiterhin betrifft die Erfindung ein Verfahren zum Bestimmen von Korrekturmaßnahmen der Prozessführung eines Verfahrens zur additiven Herstellung von Baustrukturen auf der Grundlage einer Simulation. Bei dieser Simulation wird eine Prozessführung in Form von Fertigungsparametern des additiven Fertigungsverfahrens festgelegt, um die Durchführung der Simulation zu ermöglichen. Weiterhin wird ein Fertigungsdatensatz für die Baustruktur zur Verfügung gestellt. Dieser Fertigungsdatensatz beschreibt die Baustruktur in herzustellenden Lagen, da die Baustruktur in aufeinanderfolgenden Lagen hergestellt werden soll. Die Baustruktur kann aus einem herzustellenden Bauteil bestehen. Zu der Baustruktur gehören aber häufig auch Stützstrukturen, welche fertigungsbedingt zusammen mit dem Bauteil hergestellt werden und nach der Herstellung der Baustruktur von dem Bauteil entfernt werden. Bei der Simulation wird weiterhin eine globale Wärmeentwicklung in dem in Herstellung befindlichen Bauteil in Form einer Referenztemperatur $T_r$ berücksichtigt. Außerdem wird die lokale Wärmeentwicklung in der Umgebung des Wärmeeintrags durch einen Energiestrahl, beispielsweise einen Laserstrahl, berechnet. Wie bereits erwähnt, fährt der Energiestrahl einen bestimmten Werkzeugpfad ab, der durch die Prozessführung ebenso die durch die bereits erwähnten Prozessparameter vorgegeben wird.

Die Erfindung kann auch mit einem Speicherformat für Bauanweisungen für ein additives Fertigungsverfahren verwendet werden, indem ein Werkzeugpfad definiert ist, der aus einer Vielzahl von Vektoren zusammengesetzt ist. Unter einem Speicherformat ist die Konfiguration eines Speichers zu verstehen, wobei die Konfiguration die Speicherung bestimmter gewünschter Daten ermöglicht. Darunter fallen die Vektoren, die den Werkzeugpfad definieren. Diese definieren, wie bereits erwähnt, die Prozessführung hinsichtlich der erforderlichen Bewegung des Energiestrahls.

Zuletzt betrifft die Erfindung Computer-Programmprodukte mit Programmbefehlen zur Durchführung der oben genannten Verfahren sowie eine Bereitstellungsvorrichtung für die besagten Computer-Programmprodukte.

Als additive Fertigungsverfahren im Sinne dieser Anmeldung sollen Verfahren verstanden werden, bei denen das Material, aus dem ein Bauteil hergestellt werden soll, dem Bauteil während der Entstehung hinzugefügt wird. Dabei entsteht das Bauteil bereits in seiner endgültigen Gestalt oder zumindest annähernd in dieser Gestalt.

Um das Bauteil herstellen zu können, werden das Bauteil beschreibende Daten (CAD-Modell) für das gewählte additive Fertigungsverfahren aufbereitet. Die Daten werden zur Erstellung von Anweisungen für die Fertigungsanlage in an das Fertigungsverfahren angepasste Daten eines herzustellenden Werkstücks umgewandelt, damit in der Fertigungsanlage die geeigneten Prozessschritte zur sukzessiven Herstellung dieses Werkstücks ablaufen können. Die Daten werden dafür so aufbereitet, dass die geometrischen Daten für die jeweils herzustellenden Lagen (Slices) des Werkstücks zur Verfügung stehen, was auch als Slicen bezeichnet wird. Das Werkstück kann eine vom Bauteil abweichende Gestalt haben. Beispielsweise kann ein herstellungsbedingter Bauteilverzug berücksichtigt werden, der durch eine abweichende Werkstückgeometrie kompensiert wird. Auch weist das Werkstück gewöhnlich Stützstrukturen auf, die bei einer Nachbearbeitung des Bauteils wieder entfernt werden müssen.

Ausgangspunkt für die Durchführung eines additiven Fertigungsverfahrens ist eine Beschreibung des Werkstücks in einem Geometriedatensatz, beispielsweise als STL-File (STL steht für Standard Tessellation Language). Das STL-File enthält die dreidimensionalen Daten für eine Aufbereitung zwecks Herstellung durch das additive Fertigungsverfahren. Aus dem STL-File wird ein Fertigungsdatensatz, beispielsweise ein CLI-File (CLI steht für Common Layer Interface) erzeugt, welcher eine zum additiven Herstellen geeignete Aufbereitung der Geometrie des Werkstücks in Lagen oder Scheiben (sog. Slices) enthält. Die Transformation der Daten wird als Slicen bezeichnet. Außerdem benötigt die Maschine weitere Vorgaben zum Herstellen, z.B. die Höhe der herzustellenden Lagen, die Ausrichtung der Schreibvektoren, also Richtung und Länge des Weges, welchen der Energiestrahl auf der Oberfläche des Pulverbettes beschreibt, und die Aufteilung der zu erzeugenden Werkstücklage in Sektoren, in denen bestimmte Verfahrensparameter gelten. Des Weiteren sind Fokusdurchmesser und Leistung des verwendeten Energiestrahls festzulegen. Das CLI-File und die Herstellungsdaten bestimmen zusammen einen Ablaufplan, nach dem das im STL-File beschriebene Werkstück in der Fertigungsanlage Lage für Lage additiv hergestellt werden kann.

Wie oben stehend erläutert, werden additive Fertigungsverfahren computergestützt durchgeführt, um ausgehend von einem das herzustellenden bauteilbeschreibenden Datensatz das reale Bausteine herstellen zu können. Sofern es in der nachfolgenden Beschreibung nicht anders angegeben ist, beziehen sich die Begriffe "erstellen", "berechnen", "rechnen", "feststellen", "generieren", "konfigurieren", "modifizieren" und dergleichen, vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere ist der Ausdruck "Computer" breit auszulegen, um alle elektronischen Geräte mit Datenverarbeitungseigenschaften abzudecken. Computer können somit beispielsweise Personal Computer, Server, Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung sein, die vorzugsweise auch zu einem Netzwerk zusammengeschlossen sein können.

Unter "rechnergestützt" kann im Zusammenhang mit der Erfindung beispielsweise eine Implementierung des Verfahrens verstanden werden, bei dem ein Computer oder mehrere Computer mindestens einen Verfahrensschritt des Verfahrens ausführt oder ausführen.

Unter einem "Prozessor" kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder einen DSP (Digitaler Signalprozessor, engl. Digital Signal Processor) handeln. Auch kann unter einem Prozessor ein virtualisierter Prozessor oder eine Soft-CPU verstanden werden. Es kann sich beispielsweise auch um einen programmierbaren Prozessor handeln, der mit einer Konfiguration zur Ausführung des genannten erfindungsgemäßen Verfahrens ausgerüstet ist.

Unter einer "Speichereinheit" kann im Zusammenhang mit der Erfindung beispielsweise ein computerlesbarer Speicher in Form eines Arbeitsspeichers (engl. Random-Access Memory, RAM) oder einer Festplatte verstanden werden.

Als Beispiele für das additive Fertigen können das selektive Lasersintern (auch SLS für Selective Laser Sintering), das Selektive Laserschmelzen (auch SLM für Slective Laser Melting) und das Elektronenstrahlschmelzen (auch EBM für Electron Beam Melting) genannt werden. Diese Verfahren eignen sich insbesondere zur Verarbeitung von metallischen Werkstoffen in Form von Pulvern, mit denen Konstruktionsbauteile hergestellt werden können.

Beim SLM, SLS und EBM werden die Bauteile lagenweise in einem Pulverbett hergestellt. Diese Verfahren werden daher auch als pulverbettbasierte additive Fertigungsverfahren bezeichnet.

Es wird jeweils eine Lage des Pulvers in dem Pulverbett erzeugt, die durch die Energiequelle (Laser oder Elektronenstrahl) anschließend in denjenigen Bereichen lokal aufgeschmolzen oder gesintert wird, in denen das Bauteil entstehen soll. So wird das Bauteil sukzessive lagenweise erzeugt und kann nach Fertigstellung dem Pulverbett entnommen werden.

Verfahren der eingangs angegebenen Art sind beispielsweise in der WO 2017/174160 A1 beschrieben. Gemäß diesem Dokument werden herstellungsbedingte Formabweichungen und Spannungen in einer mit einem additiven Herstellungsverfahren hergestellten Baustruktur dadurch ermittelt, dass eine Simulation durchgeführt wird. Dabei werden sogenannte Superlagen erzeugt, die mehrere herzustellende Lagen aufweisen und dadurch den Rechenaufwand bei der Simulation verringern. Um dabei trotzdem ein Simulationsergebnis mit genügender Genauigkeit zu erhalten, werden Schrumpfungsfaktoren für das verfestigte Material ermittelt, um in der jeweiligen Superlage eine effektive Schrumpfung zu berechnen.

Die Schrumpfung wird maßgeblich durch die während der Herstellung der Baustruktur herrschenden Temperaturen beeinflusst. Daher wird bei dem Verfahren gemäß der WO 2017/174160 A1 sowohl das thermische Verhalten der bisher hergestellten Baustruktur global berechnet sowie auch das direkte Abkühlungsverhalten des Schmelzbads in der gerade hergestellten Lage lokal. Mit dem Verfahren lässt sich der Aufwand bei der Simulation zwar verringern, allerdings ist die Simulation im Vorfeld einer Herstellung der Baustruktur nach wie vor mit einem bedeutenden Rechenaufwand verbunden. Das Endergebnis der Simulation ist eine Baustruktur, bei der die Schrumpfung und die Ausbildung von Gefügespannungen bei der Formgebung berücksichtigt sind, indem eine mittels des Simulationsverfahrens modifizierte Geometrie der Baustruktur hergestellt wird, die aufgrund der Spannungen und Schrumpfungen die gewünschte Geometrie der Baustruktur annimmt. Die Aufgabe der Erfindung besteht darin, die eingangs angegebenen Verfahren derart weiterzubilden, dass eine möglichst genaue Simulation eines additiven Herstellungsverfahrens mit vergleichsweise geringem Rechenaufwand ermöglicht wird. Zu diesem Zweck soll das Verfahren für die additive Herstellung der Baustruktur die Prozessführung bestimmen. Außerdem ist es Aufgabe der Erfindung, ein Verfahren zum Bestimmen von Korrekturmaßnahmen einer Prozessführung zum Herstellen von Baustrukturen anzugeben, bei der die Korrekturmaßnahmen auf der Grundlage einer Simulation ermittelt werden. Zuletzt ist es auch Aufgabe der Erfindung ein Speicherformat anzugeben, mit dem Bauanweisungen für ein additives Fertigungsverfahren und somit die Prozessführung des additiven Fertigungsverfahrens flexibel abgespeichert werden kann. Zuletzt ist es Aufgabe der Erfindung, Computer-Programmprodukte anzugeben, mit denen sich die oben genannten Verfahren durchführen lassen.

Die Aufgabe wird mit dem eingangs angegebenen Verfahren zum Bestimmen von eine Prozessführung beschreibenden Bauvorschriften zur additiven Herstellung einer Baustruktur erfindungsgemäß dadurch gelöst, dass in Abhängigkeit der globalen Wärmeentwicklung und der lokalen Wärmeentwicklung aus einer Datenbank Korrekturmaßnahmen der Prozessführung geladen werden. Diese Korrekturmaßnahmen der Prozessführung werden dann lokal einzelnen Vektoren des Werkzeugpfads des Energiestrahls zugeordnet. Als Korrekturmaßnahmen der Prozessführung, die aus den Bauschriften resultiert, eignen sich unterschiedliche Maßnahmen, die im Folgenden näher erläutert werden sollen. Gemäß einer Ausgestaltung der Erfindung kann mindestens eine der folgenden Korrekturmaßnahmen zur Korrektur herangezogen werden:

- eine Verringerung der Leistung des Energiestrahls, so dass der Wärmeeintrag in die Oberfläche des in Entstehung befindlichen Bauteils verringert wird.
- Eine Verlängerung der Pausenzeiten zwischen den Bestrahlungszeiten einzelner Vektoren, so dass der Energieeintrag pro Zeiteinheit und damit die Leistungsdichte der eingetragenen Energie verringert wird.
- Eine Vergrößerung der Verfahrgeschwindigkeit des Energiestrahls, so dass der Leistungseintrag pro Flächeneinheit verringert wird, da der Energiestrahl ein bestimmtes Flächenelement der Oberfläche kürzer bestrahlt.
- Eine Vergrößerung des Hatch-Abstands zwischen den Vektoren, also des Abstands parallel verlaufender Linien der Bestrahlung, wodurch die Energiedichte pro Flächeneinheit verringert wird, indem in der Flächeneinheit weniger Vektoren verlaufen.
- Eine Veränderung der Vektorreihenfolge, wodurch z. B. erreicht werden kann, dass Vektoren in Bereichen einer kritischen Wärmeentwicklung nicht direkt nacheinander, sondern in einem größeren Zeitabstand bestrahlt werden. Dabei steigen nicht die Pausenzeiten, sondern in der Zwischenzeit werden beispielsweise andere unkritische Vektoren belichtet.
- Eine Veränderung der Vektorlänge, wobei in Bereichen einer kritischen Wärmeentwicklung beispielsweise kürzere Vektoren vorgesehen werden, damit lokal ein früherer Wechsel zu einem anderen Teilbereich der zu belichtenden Fläche erfolgt.
- Eine Veränderung der Vektorausrichtung, wobei die Vektorausrichtung beispielsweise so geändert werden kann, dass der Vektor zu einem größeren Anteil in Bereichen der zu belichtenden Fläche verläuft, die im Vergleich zum ursprünglichen Verlauf weniger kritisch hinsichtlich einer übermäßigen Wärmeentwicklung sind.

Die oben stehenden Korrekturmaßnahmen haben gemeinsam, dass durch diese der Leistungseintrag in die Baustruktur verringert wird. Ein wesentliches Problem in der Fertigung von Bauteilen durch additive Fertigungsverfahren liegt nämlich in der Überhitzung der in Entstehung befindlichen Baustruktur. Normalerweise werden beispielsweise die Prozessparameter für den Energiestrahl an einem Standardkörper, wie z. B. einem massiven Würfel, erprobt und anschließend festgelegt. Eine real zu erzeugende Baustruktur beinhaltet aber oft dünnwandige oder überhängende Strukturen. In diesen Bereichen stellt der bereits hergestellte Teilkörper der Baustruktur lokal eine wesentlich kleinere thermische Kapazität zur Verfügung, so dass an diesen Stellen die hergestellte Struktur bei Verwendung der standardisierten Prozessparameter lokal überhitzt. Dies führt zu unerwünscht großen Schmelzbädern und damit zu einer Erhöhung von Spannungen und Dehnungen im fertig hergestellten Bauteil. Außerdem kann es zu Bauteilfehlern aufgrund der Bildung großer Schmelzperlen im weiteren Aufbau der Baustrukturen kommen. Diese können die Applikation folgender Pulverschichten empfindlich stören und sogar einen Prozessabbruch notwendig machen, wenn eine Kollision zwischen einer vergrößerten Schmelzperle und der Beschichtungsvorrichtung das Werkstück oder die Beschichtungsvorrichtung beschädigen.

Diesem Problem kann vorgebeugt werden, wenn in identifizierten Regionen der herzustellenden Baustruktur der Leistungseintrag in die Oberfläche der bereits hergestellten Baustruktur verringert wird. Die Korrekturmaßnahmen der Prozessführung können gemäß einer vorteilhaften Ausgestaltung der Erfindung derart bestimmt werden, dass ein durch den Energiestrahl erzeugtes Schmelzbad eine Größe aufweist, die in einem festgelegten Intervall liegt. Dieses Intervall berücksichtigt, dass eine genaue Einstellung der Schmelzbadgröße fertigungstechnisch nicht möglich ist. Gewisse Toleranzen müssen erlaubt sein, wobei die zulässigen Toleranzen das Intervall bestimmen. Es kann beispielsweise gemessen werden (durch Versuche), welche Abweichungen der Schmelzbadgröße noch hinnehmbar sind, ohne dass es zu nicht akzeptablen Qualitätseinbußen für das Bauteil kommt. So wird das Intervall festgelegt.

Wird im fortlaufenden Verfahren das Schmelzbad zu groß, so ist die Leistung zu verringern. Dabei kann die Größe des Schmelzbads durch dessen Volumen an aufgeschmolzenem Material definiert sein. Auch ist es möglich, die radiale und/oder Tiefenausdehnung als Maß für die Größe zu verwenden. Hierdurch entsteht eine Sollgröße, wobei das Intervall durch die zulässigen Toleranzabweichungen von der Sollgröße definiert ist.

Vorteilhaft wird die Ergebnisfindung dadurch erleichtert, dass die Schmelzbadgröße durch eine Simulation berechnet wird. Bei dieser Simulation wird die Bauhistorie des Bauteils berücksichtigt, d. h. wie das bisherige Bauteil entstanden ist. Hierbei sind sowohl die Geometrie des Bauteils, insbesondere das Volumen, die Wärmekapazität des Materials, sowie die Historie des Energieeintrags von Bedeutung. Die Berechnung der Wärmeverteilung in dem bereits hergestellten Bauteil soll im Folgenden als makroskalige Simulation bezeichnet werden, da die Geometrie des gesamten bereits hergestellten Bauteils hierbei berücksichtigt wird.

Um den Rechenaufwand gering zu halten und gleichzeitig ein gut angenähertes Simulationsergebnis zu bekommen, wird erfindungsgemäß eine unvollständige Prozesssimulation verwendet, um die Daten zur Korrektur der Prozessführung zu erhalten. Unter einer unvollständigen Prozesssimulation wird eine Berechnung verstanden, die die Temperaturverteilung sowie das Spannungs-Dehnungsverhalten entweder im gesamten Werkstück unter vereinfachten Annahmen oder mit realistischen Annahmen, allerdings in einem stark reduzierten Berechnungsvolumen durchführt. Diese Maßnahme ermöglicht es, mit heute verfügbaren Rechnern bei der Prozesssimulation von additiven Fertigungsverfahren überhaupt zu wirtschaftlich attraktiven Rechenzeiten zu gelangen. Erfindungsgemäß wird bei dem Verfahren zum Bestimmen der Prozessführung die Wärmeentwicklung in den bereits hergestellten Lagen der Baustruktur unter vereinfachten Annahmen individuell für jede Baustruktur berechnet. Da sich die Wärmeverteilung in der bereits hergestellten Baustruktur im Vergleich zur Abkühlung des Schmelzbads langsam verändert, ist eine Berechnung unter vereinfachten Bedingungen prinzipiell ausreichend. So kann beispielsweise davon ausgegangen werden, dass der kumulierte Energieeintrag des Energiestrahls über die gesamte Fläche der hergestellten Lage eingetragen wird.

Für die Berechnung der Temperaturverteilung im Schmelzbad ist ein höherer Aufwand notwendig, um die komplexen Vorgänge vorhersagen zu können. Im Rahmen der Erfindung wird in diesem Kontext die Größenordnung zur Berechnung des Schmelzbads bzw. der frisch aufgeschmolzenen Spur als mesoskalige Simulation bezeichnet. Dabei ist es möglich, den Wärmeeintrag durch den Energiestrahl in Abhängigkeit der direkten Bauteilumgebung zu berechnen (hierzu im Folgenden noch mehr).

Der mit der mesoskaligen Simulation verbundene Rechenaufwand soll erfindungsgemäß dadurch verringert werden, dass für berechnete mesoskalige Wärmeverteilungen eine Datenbank erstellt wird, in der Korrekturmaßnahmen für die Prozessführung zur Verfügung gestellt werden. Diese können erfindungsgemäß ausgewählt werden, indem die Bauteilumgebung geometrisch ohne aufwändige Berechnung der Temperaturverteilung im Bereich des Schmelzbads analysiert werden. Hierdurch wird vorteilhaft der Rechenaufwand beträchtlich vermindert, weswegen es erfindungsgemäß möglich ist, lokal einzelnen Vektoren des Werkzeugpfads des Energiestrahls individuelle Korrekturmaßnahmen zuzuordnen. Dies ermöglicht eine Modifikation der Prozessführung, während der Energiestrahl den Werkzeugpfad durchläuft. Insbesondere kann der Wärmeeintrag durch die Korrekturmaßnahmen in Bereichen mit kritischer Überhitzungsneigung individuell verringert werden. Hierdurch verbessert sich bei geringem Rechenaufwand nicht nur die Qualität des hergestellten Bauteils (Vermeidung von Fehlern wie Schweißperlen). Auch die Ausbildung von Spannungen und Dehnungen in der hergestellten Baustruktur können vorteilhaft verringert werden.

Um die Geometrie der lokalen Umgebung des Schmelzbads beurteilen zu können, ist es gemäß einer vorteilhaften Ausgestaltung der Erfindung möglich, dass für einzelne Vektoren des Werkzeugpfads mindestens ein Massenintegral berechnet wird. Dabei wird über ein definiertes Volumen integriert (hierzu im Folgenden noch mehr). Das Integrationsvolumen beinhaltet überdies einen Teil der dem Energiestrahl zugewandten Oberfläche der in Entstehung befindlichen Baustruktur. So ist es möglich, dass ein Punkt jedes Vektors in dem Integrationsvolumen liegt. Vorteilhaft ist das Integrationsvolumen zentralsymmetrische ausgebildet, so dass der betrachtete Punkt des Vektors im Zentrum dieses Integrationsvolumens liegt. Selbstverständlich liegen dann gleichzeitig auch andere Punkte des Vektors in dem Integrationsvolumen. Allerdings wird ein Bezugspunkt definiert, der vorzugsweise im Zentrum des Integrationsvolumens liegt. Die Zentralsymmetrie ergibt sich in der Ebene der Oberfläche der Baustruktur.

Die Berechnung eines Massenintegrals hat sich vorteilhaft als leicht zu berechnende und dennoch aussagekräftige Maßnahme zur Beurteilung des Wärmeverhaltens der Baustruktur in der Umgebung des Schmelzbads herausgestellt. Das Massenintegral ist proportional zur Wärmekapazität in der direkten Umgebung des Schmelzbads und stellt daher ein gutes Maß für die Beurteilung des lokalen thermischen Verhaltens der in Entstehung befindlichen Baustruktur dar. Vorteilhaft werden die Korrekturmaßnahmen in der Datenbank mit zugehörigen Massenintegralen gespeichert, so dass die Auswahl von geeigneten Korrekturmaßnahmen unter Berücksichtigung der Ähnlichkeit der Massenintegrale ausgesucht werden kann (hierzu im Folgenden noch mehr). Geeignete Korrekturmaßnahmen können dabei auch auf Basis eines Vergleichs des berechneten Massenintegrals mit in der Datenbank gespeicherten Massenintegralen bestimmt werden. Eine Ähnlichkeit kann dabei bezüglich eines Ähnlichkeitsmaßes festgestellt werden. Beispielsweise durch ein Differenzmaß des bestimmten Massenintegrals und des in der Datenbank hinterlegten Massenintegrals.

Längs des Werkzeugpfades wird an einigen Punkten (z. B. pro Vektor einmal) das mit der Funktion w(x,y,z) gewichtete Massenintegral

$$M = \iiint_V \rho(x,y,z) * w(x,y,z)$$

gebildet, wobei das Integrationsvolumen V bevorzugt ein Halb-Ellipsoid mit einer Halbachse $\delta r$ der Ausdehnung in der x-y-Ebene und einer Halbachse $\delta z$ der Ausdehnung in negativer z-Richtung ist, wobei $\delta r$ und $\delta z$ geeignet gewählte Parameter sind.

Für jeden Vektor muss mindestens ein Massenintegral berechnet werden, welches dann repräsentativ für den Vektor verwendet werden kann. Bei kurzer Länge der Vektoren können Abweichungen, die sich über die Länge der Vektoren für das Massenintegral ergeben, vernachlässigt werden, ohne zu große Abweichungen hinnehmen zu müssen. Insbesondere bei längeren Vektoren können jedoch auch mehrere Massenintegrale für den Vektor berechnet werden.

So kann gemäß einer vorteilhaften Ausgestaltung der Erfindung für die Vektoren zumindest ein Massenintegral am Anfang und ein Massenintegral am Ende des Vektors berechnet werden. Vorzugsweise könnte ein weiteres Massenintegral in der Mitte des Vektors berechnet werden. Alternativ ist es auch möglich, dass auf dem Vektor in regelmäßigen Abständen Stützpunkte definiert werden, für die das Massenintegral berechnet wird. Gemäß einer Ausgestaltung der Erfindung kann dann von den je Vektor berechneten Massenintegralen für den Vektor dasjenige ausgewählt werden, welches den geringsten Wert hat. Hierdurch wird der Wärmeeintrag durch den Energiestrahl auf jeden Fall soweit gedrosselt, dass es nicht zu einer Überhitzung kommen kann. Die Verringerung des Wärmeeintrags fällt wegen der Berücksichtigung des minimalen Massenintegrals dann eher zu hoch aus.

Eine andere Möglichkeit besteht darin, dass aus den je Vektor berechneten Massenintegralen ein Wert berechnet wird, der dem Mittelwert der Massenintegrale entspricht. Hierdurch wird ein Kompromiss angestrebt, dass einerseits die Verringerung des Energieeintrags für den betreffenden Vektor einerseits genügend hoch ausfällt, um ein Überhitzen zu verhindern und andererseits nicht zu groß ausfällt, um zu verhindern, dass das Material nicht mehr vollständig aufgeschmolzen wird oder zumindest das Schmelzbad zu klein wird.

Basierend bevorzugt auf dem Minimalwert des Massenintegrals M (alternativ dem Mittelwert von M) längs des Vektors und auf der erwarteten Referenztemperatur T(z) wird auf Grund der in der Datenbank abgelegten Regeln, die bevorzugt die Form einer analytischen Funktion f wie z.B.

Laserleistung = f( M_min(vektor), Vektorlänge, T) bei Verwendung des Minimalwertes oder

Laserleistung = f( M_med(vektor), Vektorlänge, T) bei Verwendung des Mittelwertes

oder auch einer für die Interpolation geeigneten Tabelle vorliegen, für jeden Vektor des Werkzeugpfades eine Korrektur der Prozessparameter berechnet. Alternativ kann die Laserleistung vom Start- zum Endpunkt des Vektors angepasst, oder (bei einer zu großen Spreizung des Massenintegrals) der Scanvektor in Subvektoren mit jeweils angepasster Leistung zerlegt werden. Die Realisierung erfordert die Definition eines gegenüber dem Stand der Technik erweiterten Jobfile-Formats, welches die Möglichkeit zur Leistungsvariation innerhalb von Scanvektoren ermöglicht, und eine Erweiterung der aktuellen SLM-Maschinensteuerungen, die heute noch nicht auf die Verarbeitung eines solchen erweiterten Jobfile-Formats ausgelegt sind (hierzu im Folgenden noch mehr).

Gemäß einer besonderen Ausgestaltung der Erfindung können verschiedene Verfahren zur Bestimmung der Korrekturmaßnahmen für den betrachteten Vektor zur Anwendung kommen. Dabei kann das berechnete Massenintegral der Umgebung der Baustruktur mit in der Datenbank gespeicherten Massenintegralen verglichen werden. Dann wird dasjenige gespeicherte Massenintegral aus der Datenbank ausgewählt, welches dem berechneten Massenintegral am ähnlichsten ist. Die mit dem ausgewählten Massenintegral abgespeicherten Korrekturmaßnahmen der Prozessführung werden dann für den betrachteten Vektor ausgewählt und definieren damit eine eventuell erforderliche Verringerung des Wärmeeintrags. Dabei wird auch die globale Wärmeentwicklung berücksichtigt, welche gemäß dem erfindungsgemäßen Verfahren berechnet wurde. Diese Wärmeentwicklung kann beispielsweise als globale Temperatur $T_g$ Berücksichtigung finden. Die globale Wärmeentwicklung und die lokale Wärmeentwicklung können beispielsweise addiert werden, um die Gesamtwärmebelastung an der Stelle des Schmelzbads zu berechnen. Eine andere Möglichkeit besteht darin, die globale Wärmeentwicklung zu verwenden, um in der Datenbank ein geeignetes Massenintegral auszuwählen. In diesem Fall erfolgt die Simulation der Massenintegrale bei einer bestimmten Referenztemperatur $T_r$, die das globale Temperaturniveau des Bauteils beschreibt.

Eine andere Ausgestaltung der Erfindung sieht vor, dass zur Bestimmung der Korrekturmaßnahmen, die in diesem Fall die Form von Korrekturwerten haben, das berechnete Massenintegral mit in einer Datenbank gespeicherten Massenintegralen verglichen wird. Diejenigen gespeicherten Massenintegrale werden aus der Datenbank ausgewählt, welche den berechneten Massenintegral am ähnlichsten sind. Hierbei kann es sich um mehrere Massenintegrale handeln (insbesondere zwei), die beide in der Nähe des berechneten Massenintegrals liegen. Die mit den ausgewählten Massenintegralen abgespeicherten Korrekturwerte für die Prozessparameter der Prozessführung für den betrachteten Vektor werden dann ausgewählt, wobei eine Interpolation dieser Korrekturwerte durchgeführt wird. Das Ergebnis dieser Interpolation wird dann als resultierender Korrekturwert für die Korrektur der Prozessführung verwendet.

Werden die Massenintegrale für unterschiedliche Referenztemperaturen abgespeichert, so kann es sich bei den ausgewählten Massenintegralen, die den berechneten Massenintegralen am ähnlichsten sind, auch um Massenintegrale handeln, die ähnliche Referenztemperaturen wie die globale Temperatur jedoch nicht die gleiche Temperatur aufweisen. Auch hier ist eine Interpolation der Korrekturwerte möglich.

Die Korrekturmaßnahmen müssen in diesem Fall in Form von Korrekturwerten vorliegen, weil dies Voraussetzung für eine Interpolation ist. Mit anderen Worten muss sich die Korrekturmaßnahme als Zahlenwert ausdrücken lassen, beispielsweise in der Verringerung der Laserleistung oder Vergrößerung des Hatch-Abstandes oder Verlängerung einer Pausenzeit. Durch eine Interpolation wird erreicht, dass bei einem begrenzten Vorrat an Elementen der Datenbank trotzdem eine vergleichsweise genaue Korrektur der Prozessführung möglich wird. Der damit verbundene Rechenaufwand einer Interpolation ist im Vergleich zum eingesparten Simulationsaufwand sehr gering, so dass die Wirtschaftlichkeit des Verfahrens vorteilhaft verbessert wird.

Das Massenintegral kann gemäß einer vorteilhaften Ausgestaltung der Erfindung die Gestalt eines Ellipsoids oder eines Halbellipsoids haben, wobei eine Halbachse $\delta r$ in der x-y-Ebene der herzustellenden Lage liegt und die Hauptachse des Ellipsoids $\delta z$ in z-Richtung liegt. Insbesondere kann der Ellipsoid auch kugelförmig sein. Die Form der besagten Masseningetrale ist zentralsymmetrisch und in der Form der Geometrie des Schmelzbads ähnlich. Auf diesem Wege lässt sich die Umgebung des Schmelzbads in alle Richtung mit gleicher Gewichtung beurteilen, weswegen das Ergebnis des Massenintegrals sich vorteilhaft gut an die Realität anpassen lässt.

Weiterhin wird die oben angegebene Aufgabe durch das eingangs angegebene Verfahren zum Bestimmen von Korrekturmaßnahmen für die Prozessführung eines Verfahrens zur additiven Herstellung erfindungsgemäß dadurch gelöst, dass bei dem Verfahren folgende Schritte durchlaufen werden. Die lokale Wärmeentwicklung in der Umgebung des Wärmeeintrags durch den Energiestrahl wird für repräsentative Volumenelemente mit vorgegebener Geometrie berechnet. Im Falle einer zu großen berechneten Wärmeentwicklung werden Korrekturmaßnahmen der Prozessführung lokal einzelnen Vektoren eines Werkzeugpfads des Energiestrahls zugeordnet. Es wird ein Massenintegral über ein Teilvolumen des repräsentativen Volumenelements berechnet, wobei in diesem Teilvolumen die Korrekturmaßnahmen erforderlich sind. Die Korrekturmaßnahmen werden dann mit dem zugehörigen Massenintegral in einer Datenbank abgespeichert. Als weitere Vorgaben kann auch die Temperatur berücksichtigt werden, die durch eine globale Wärmeentwicklung eines das repräsentative Volumenelement enthaltenen Werkstücks vorgegeben wird. Da diese für ein gesondert betrachtetes repräsentatives Volumenelement nicht bekannt ist, kann das repräsentative Volumenelement für eine Referenztemperatur oder mehrere unterschiedlicher Referenztemperaturen berechnet werden. Weiterhin müssen bei der Simulation die Materialeigenschaften des verarbeiteten Pulvermaterials Beachtung finden. Insbesondere zu nennen sind die Schmelztemperatur und die Wärmekapazität, die das Verhalten des Schmelzbads bei unterschiedlichen Temperaturen beeinflussen. Selbstverständlich muss auch der Werkzeugpfad für die Simulation festgelegt werden.

Das Verfahren hat den Vorteil, dass für die repräsentativen Volumenelemente die Wärmeentwicklung mit einem vergleichsweise hohen Rechenaufwand simuliert werden kann. Die repräsentativen Volumenelemente spiegeln dabei lokale Bauteilstrukturen wieder, die bei der Herstellung kritisch sind. Hierbei kann es sich beispielsweise um Überhänge oder dünnwandige Strukturen mit waagerechter Wandausrichtung handeln. In den repräsentativen Volumenelementen wird dann unter den Vorgaben, wie sie für die Herstellung von realen Baustrukturen vorgegeben werden, eine Temperaturentwicklung ermittelt, so dass beurteilt werden kann, ob die kritische Geometrie der repräsentativen Volumenelemente zu einer kritischen Überhitzung einer real hergestellten Baustruktur führen würde. Anschließend können verschiedene Korrekturmaßnahmen durchgerechnet werden. Wird für ein repräsentatives Volumenelement eine Korrekturmaßnahme aufgefunden, welche das Überhitzungsproblem zufriedenstellen löst, kann diese Korrekturmaßnahme mit dem zugehörigen Massenintegral über dem repräsentativen Volumenelement in der Datenbank abgespeichert werden. Durch einen Vergleich der Massenintegrale, die für eine reale Baustruktur berechnet wurden, mit den in der Datenbank abgelegten Massenintegrale lässt sich daher eine für die Herstellung einer realen Baustruktur geeignete Korrekturmaßnahme auswählen.

Längs des Werkzeugpfades für das betreffende repräsentative Volumenelement wird an einigen Punkten (z. B. pro Vektor einmal) das mit der Funktion w(x,y,z) gewichtete Massenintegral

$$M = \iiint_V \rho(x,y,z) * w(x,y,z)$$

gebildet, wobei das Integrationsvolumen V bevorzugt ein Halb-Ellipsoid mit einer Halbachse $\delta r$ der Ausdehnung in der x-y-Ebene und einer Halbachse $\delta z$ der Ausdehnung in negativer z-Richtung ist, wobei $\delta r$ und $\delta z$ geeignet gewählte Parameter sind. Damit kann die Berechnung genauso erfolgen, wie im Verfahren zum Bestimmen von Bauvorschriften für herzustellende Baustrukturen (wie oben bereits erläutert), da die Massenintegrale beider Verfahren miteinander vergleichbar sein müssen.

Die repräsentativen Volumenelemente können ebenfalls als Baustrukturen verstanden werden, deren Geometrie hinsichtlich bestimmter kritischer geometrischer Merkmale eine Überhitzung provoziert. Diese Baustrukturen lassen daher durch eine Ermittlung einer geometrischen Ähnlichkeit mit einer später hergestellten realen Baustruktur eine Korrektur des Baujobs zu, ohne dass die lokale Wärmeentwicklung durch das Schmelzbad bei den realen Baustrukturen simuliert werden müsste. Hierin liegt erfindungsgemäß das enorme Einsparungspotential hinsichtlich des Simulationsaufwands, wobei erfindungsgemäß die Ähnlichkeit des simulierten repräsentativen Volumenelements mit einem betreffenden lokalen Teilbereich der herzustellenden Baustruktur über das Massenintegral hergestellt wird. Es hat sich nämlich gezeigt, dass das Massenintegral eine ausreichende Näherung für die Beurteilung der lokal zur Verfügung stehenden Wärmekapazität darstellt, weswegen die Auswahl der Korrekturmaßnahme vorteilhaft durch einen einfachen Vergleich der Massenintegrale und evtl. eine Interpolation von Korrekturmaßnahmen (bzw. Korrekturwerten, wie oben beschrieben) ermöglicht.

Gemäß einer vorteilhaften Ausgestaltung der Erfindung kann vorgesehen werden, dass die repräsentativen Volumenelemente die Form von Quadern, insbesondere Würfeln und/oder Prismen mit zwei parallel sich zu den Lagen erstreckenden Mantelflächen und mindestens einer geneigt zu den Lagen verlaufenden und die parallelen Mantelflächen verbindenden Mantelfläche und/oder Dreiecksprismen mit einer zu den Lagen parallel verlaufenden Mantelfläche aufweisen. Dies bedeutet mit anderen Worten, dass die Prismen mit ihren geneigten Flächen herzustellende Überhänge simulieren, wobei diese mit unterschiedlichen Winkeln in realen Baustrukturen auftreten können. Mit den Prismen lässt sich daher vorteilhaft einer der am häufigsten auftretenden Quellen für Überhitzungen überprüfen, nämlich Überhänge oder Hinterschneidungen in Baustrukturen. Die Quader können so ausgebildet werden, dass diese dünnwandige Strukturen simulieren, unterhalb derer sich Pulvermaterial befindet, so dass eine Wärmeabfuhr im Wesentlichen auf das Material des Quaders beschränkt ist. Hierdurch lassen sich dünnwandige Strukturen simulieren, wobei diese beliebig im Pulverbett ausgerichtet sein können. Als Neigung wird ein Winkel der geneigten Fläche zur Ebene der Lagen von > 0° bis < 90° verstanden. Insbesondere kann die Neigung einen Winkel > 0° und < 30° aufweisen, da diese Neigungsfläche als kritisch für die Wärmeentwicklung in der herzustellenden Baustruktur aufgefasst werden kann.

Gemäß einer weiteren Ausgestaltung der Erfindung ist vorgesehen, dass ein repräsentatives Volumenelement, welches insbesondere quaderförmig ist, dessen Umrandung rundherum von Material der Baustruktur umgeben ist, verwendet wird, um für die Prozessführung Referenzwerte zu ermitteln, wobei die Korrekturparameter auf eine Verringerung des Energieeintrags durch den Energiestrahl zielen. Das quaderförmige repräsentative Volumenelement repräsentiert damit einen unkritischen Teilbereich einer herzustellenden Baustruktur, bei der der Wärmeeintrag maximiert werden kann. Hierzu ist es selbstverständlich auch erforderlich, dass der Wärmeabfluss nach unten sowie nach außerhalb der Umrandung erfolgen kann. Alternativ zu einer Definition der Randbedingungen jenseits des repräsentativen Volumenelements dahingehend, dass die Umrandung rundherum und unter dem repräsentativen Volumenelement von dem Material der Baustruktur umgeben ist, kann auch ein repräsentatives Volumenelement mit einem genügend großen Volumen verwendet werden, wobei dann nur die Herstellung einer neuen Lage in der Mitte dieses repräsentativen Volumenelements betrachtet wird. Unter Verwendung eines repräsentativen Volumenelements zur Ermittlung von Referenzwerten ist es möglich, dass verschiedene Parametersätze für die Herstellung der Baustruktur simuliert und miteinander verglichen werden. Alternativ ist es auch möglich, sich bei den Referenzwerten an Literaturwerten oder den Empfehlungen des Anlagenherstellers zu orientieren.

Gemäß einer vorteilhaften Ausgestaltung des Verfahrens ist vorgesehen, dass zur Berechnung einer Schmelzbadgröße das Massenintegral über ein Teilvolumen des repräsentativen Volumenelements berechnet wird. Dieses Massenintegral enthält einen Teil der dem Energiestrahl zugewandten Oberfläche des repräsentativen Volumenelements. Außerdem wird dieses Massenintegral auf mehreren Punkten des Werkzeugpfads lokalisiert, wobei für diese Punkte die Schmelzbadgröße unter Berücksichtigung der lokalen Wärmeentwicklung und einer Referenztemperatur $T_r$ berechnet wird. Auf diesem Wege lässt sich vorteilhaft ein Massenintegral erstellen, welches, wie oben beschrieben, auch in dem Verfahren zur Ermittlung der Korrekturmaßnahmen Anwendung finden kann. Dies erleichtert einen Vergleich der für die realen Baustrukturen ermittelten Massenintegrale mit denjenigen, die in der Datenbank abgelegt sind. Insbesondere kann gemäß einer vorteilhaften Ausgestaltung das Massenintegral die Gestalt eines Ellipsoids oder eines Halbellipsoids mit einer Halbachse $\delta r$ in einer x-

y-Ebene der herzustellenden Lage und δz in z-Richtung haben. Die Vorteile einer derartigen Gestaltung des Massenintegrals sind oben bereits erläutert worden.

Die Aufgabe wird weiterhin gelöst durch ein Speicherformat für eine Prozessführung beschreibende Bauanweisungen, wobei in diesem Speicherformat für jeden Vektor des Werkzeugpfads Speicherplatz für Fertigungsparameter des additiven Fertigungsverfahrens und/oder Korrekturparameter für diese Fertigungsparameter vorhanden ist. Dieses Speicherformat ist damit vorteilhaft geeignet, individuelle Fertigungsparameter für jeden Vektor abzuspeichern. Bei diesen individuellen Fertigungsparametern kann es sich um bereits mit dem oben angegeben Verfahren korrigierte Fertigungsparameter handeln. Für diesen Anwendungsfall des Speicherformats ist eine zusätzliche Abspeicherung von Korrekturparametern nicht mehr erforderlich und es muss nur Speicherplatz für die Fertigungsparameter zur Verfügung gestellt werden. Eine andere Möglichkeit ist dadurch gegeben, dass bei der Prozessführung davon ausgegangen wird, dass, wie nach dem Stand der Technik üblich, für das Verfahren bestimmte standardisierte Fertigungsparameter festgelegt werden. In dem Speicherformat können dann allerdings Korrekturparameter für diese Standardparameter abgespeichert werden. Bei diesem Anwendungsfall ist es lediglich erforderlich, dass Speicherplatz für die Korrekturparameter je Vektor vorgesehen ist. Es ist aber auch möglich, dass sowohl für die Fertigungsparameter als auch für die Korrekturparameter Speicherplatz vorgesehen wird. Dies ermöglicht die Änderung der Fertigungsparameter auch in mehreren Rekursionsschleifen. Auch wenn für jeden Vektor individuell Fertigungsparameter festgelegt wurden, können diese also im weiteren Verfahrensverlauf durch Korrekturparameter angepasst werden, für die ebenfalls vektorindividuell Speicherplatz vorgesehen wurde. Dieser Anwendungsfall ist daher vorteilhaft dazu geeignet, dass das Speicherformat flexibel verwendet werden kann. Insbesondere die beiden vorgenannten Anwendungsfälle sind durch das letztgenannte Speicherformat ebenfalls abgedeckt.

Gemäß einer vorteilhaften Ausgestaltung des Speicherformats ist vorgesehen, dass Speicherplatz für zusätzliche Vektoren vorhanden ist, wobei die zusätzlichen Vektoren mit einer Information abspeicherbar sind, welche der bereits vorhandenen Vektoren diese ersetzen sollen. Dieses Speicherformat macht möglich, dass auch der Verlauf des Werkzeugpfads verändert werden kann. Wenn durch die Veränderung des Werkzeugpfads insgesamt mehr Vektoren vorgesehen werden sollen, steht dieser Speicherplatz vorteilhaft zur Abspeicherung dieser Vektoren zur Verfügung. Außerdem ist es erforderlich, dass die Information abspeicherbar ist, wo die zusätzlichen Vektoren eingefügt werden sollen. Durch die Einfügung muss insgesamt wieder ein Werkzeugpfad entstehen, der aus einer Kette von Vektoren besteht. Nur so ist sichergestellt, dass eine Ansteuerung des Energiestrahls mit den im Speicherformat abgespeicherten Daten lückenlos definiert ist. Ein eigenes Format für zusätzliche Vektoren ist allerdings nicht nötig, wenn einfach ein modifiziertes File abgespeichert wird, in das die Vektoren bereits eingefügt oder ersetzt wurden.

Das genannte Speicherformat ist vorteilhaft dazu geeignet, eine effiziente Speicherung von modifizierten Daten zu ermöglichen, welche die Korrekturmaßnahmen der oben angegeben Verfahren berücksichtigen. Es wird dadurch vorteilhaft eine Voraussetzung geschaffen, dass mit dem erfindungsgemäßen Speicherformat die modifizierten Daten für die Durchführung des additiven Fertigungsverfahrens schnell abgerufen werden können.

Weitere Einzelheiten der Erfindung werden nachfolgend anhand der Zeichnung beschrieben. Gleiche oder sich entsprechende Zeichnungselemente sind jeweils mit den gleichen Bezugszeichen versehen und werden nur insoweit mehrfach erläutert, wie sich Unterschiede zwischen den einzelnen Figuren ergeben.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

Es zeigen:

Figur 1    eine Anlage zur additiven Fertigung von Bauteilen im Schnitt mit einer Konfiguration zur rechnergestützten Durchführung von Ausführungsbeispielen der erfindungsgemäßen Verfahren, wobei die Konfiguration als Blockschaltbild verschiedener Programmmodule dargestellt ist,

Figur 2    ein Ausführungsbeispiel des erfindungsgemäßen Verfahrens zum Bestimmen von Korrekturmaßnahmen als Flussdiagramm,

Figur 3    ein Ausführungsbeispiel des repräsentativen Volumenelements, wie es zur Bestimmung der Korrekturmaßnahmen nach einem Verfahren gemäß Figur 2 angewendet werden kann,

Figur 4    ein Ausführungsbeispiel des erfindungsgemäßen Verfahrens zum Bestimmen von Bauvorschriften als Flussdiagramm.

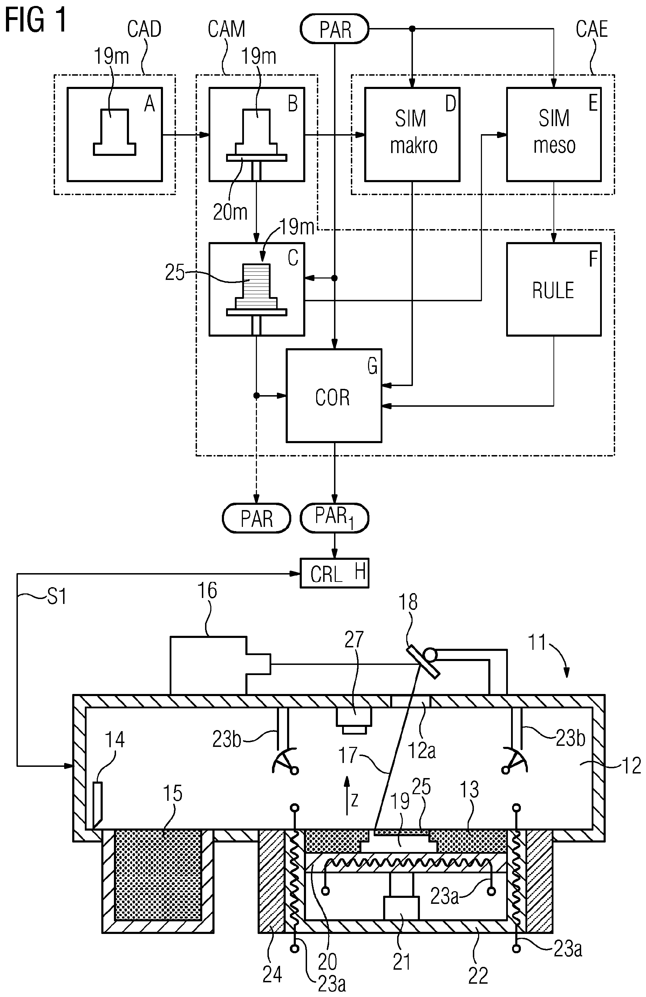

In Figur 1 ist eine Anlage 11 zum Laserschmelzen schematisch darstellt. Diese weist eine Prozesskammer 12 mit einem Fenster 12a auf, in der ein Pulverbett 13 hergestellt werden kann. Zur Herstellung jeweils einer Lage des Pulverbettes 13 wird eine Verteilungseinrichtung in Form einer Rakel 14 über einen Pulvervorrat 15 und anschließend über das Pulverbett 13 bewegt, wodurch eine dünne Schicht an Pulver im Pulverbett 13 entsteht, die eine oberste Lage 25 des Pulverbettes bildet. Ein Laser 16 erzeugt dann einen Laserstrahl 17, der mittels einer optischen Umlenkvorrichtung mit Spiegel 18 durch das Fenster 12a in die Prozesskammer 12 gelangt und über die Oberfläche des Pulverbettes 13 bewegt wird. Dabei wird das Pulver am Auftreffpunkt des Energiestrahls 17 aufgeschmolzen, wodurch ein Werkstück oder eine Baustruktur 19 entsteht.

Das Pulverbett 13 entsteht auf einer Bauplattform 20, welche über einen Aktor 21 in einem topfförmigen Gehäuse 22 schrittweise um jeweils eine Pulverlagendicke abgesenkt werden kann. In dem Gehäuse 22 sowie der Bauplattform 20 sind Heizeinrichtungen 23a in Form von elektrischen Widerstandsheizungen (alternativ sind auch Induktionsspulen möglich, nicht dargestellt) vorgesehen, welche das in Entstehung befindliche Werkstück 19 sowie die Partikel des Pulverbettes 13 vorwärmen können. Alternativ oder zusätzlich können auch Infrarotstrahler als Heizeinrichtungen 23b in der Prozesskammer 12 angeordnet werden, um die Oberfläche des Pulverbetts 13 zu bestrahlen und dadurch zu erwärmen. Um den Energiebedarf zur Vorwärmung zu begrenzen, befindet sich an dem Gehäuse 22 außen eine Isolation 24 mit geringer thermischer Leitfähigkeit. Die Temperatur an der Oberfläche des Pulvers 13 kann durch eine Wärmebildkamera 27 ermittelt werden, um im Bedarfsfall die Heizleistung der Heizeinrichtungen 23a, 23b anzupassen. Alternativ zu der Wärmebildkamera 27 können auch Temperatursensoren am Pulverbett verwendet werden (nicht dargestellt).

Die Anlage 11 zum Laserschmelzen wird über eine erste Schnittstelle S1 durch eine Steuereinrichtung CRL kontrolliert, welche vorher mit geeigneten Prozessdaten versorgt werden muss.

Um die Prozessdaten PAR zu generieren ist ein Prozessor oder eine Vielzahl von Prozessoren vorgesehen, mit denen ein Programmmodul CAD zur Durchführung eines Computer Aided Designs ein Programmmodul CAE zum Simulieren eines mit der Fertigungsanlage durchführbaren Fertigungsverfahrens sowie ein Programmmodul CAM zur Vorbereitung des Herstellungsverfahrens des Bauteils 19 durch Generierung der Prozessdaten $PAR_1$ vorgesehen ist.

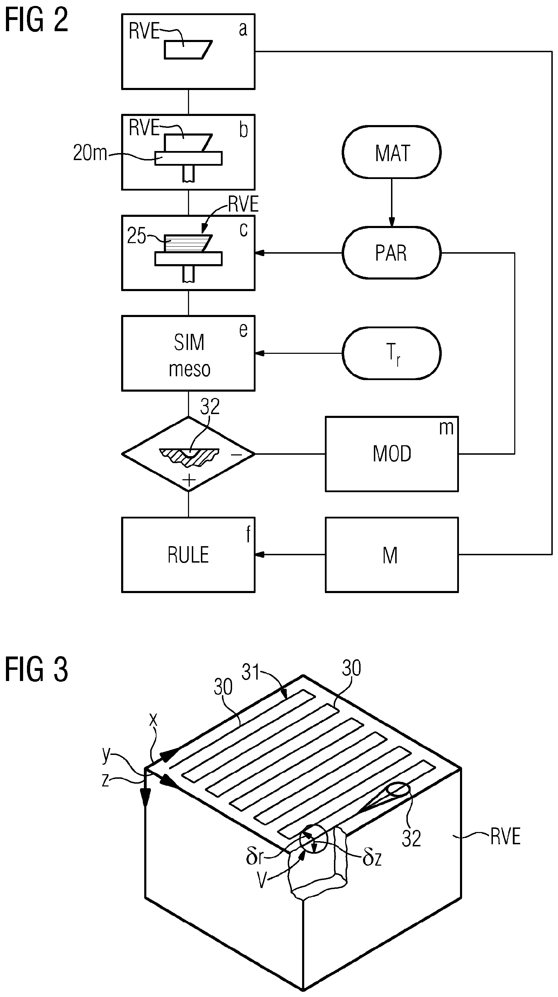

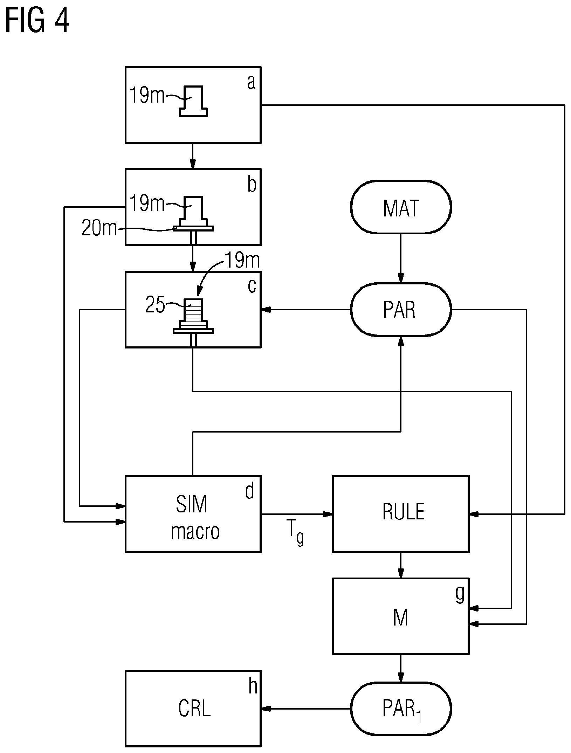

Die Hardware Infrastruktur mit dem Programmen CAD, CAE und CAM ist dazu geeignet, ein Ausführungsbeispiel des erfindungsgemäßen Verfahrens zum Bestimmen von Korrekturverfahren gemäß Figur 2 und auch ein Ausführungsbeispiel des erfindungsgemäßen Verfahrens zum Bestimmen der Prozessführung zur Herstellung eines Bauteils 19 gemäß Figur 4 durchzuführen. Bei der Erklärung des Verfahrensablaufs gemäß Figur 2 und Figur 4 wird gleichzeitig auf die Funktionsstruktur gemäß Figur 1 Bezug genommen. Die einzelnen Programmmodule in Figur 1 sind mit Großbuchstaben A bis H gekennzeichnet. Die Verfahrensschritte gemäß Figur 2 und Figur 4 sind mit kleinen Buchstaben a bis m gekennzeichnet. Soweit die Verfahrensschritte gemäß Figur 2 und Figur 4 in den Programmmodulen in Figur 1 ablaufen, stimmt der gewählte Kleinbuchstabe gemäß Figur 2 und Figur 4 jeweils mit dem gewählten Großbuchstaben gemäß Figur 1 überein.

Das Verfahren zum Bestimmen von Korrekturmaßnahmen (Figur 1 in Verbindung mit Figur 2) beginnt mit einer Erstellung von 3-D-Konstruktionsdaten durch das Programm CAD im Programmmodul A, wobei in dem Verfahrensschritt a die Geometrie eines repräsentativen Volumenelements (im Folgenden kurz RVE) festgelegt wird. In dem Programm CAM erfolgt in einem Programmmodul B der Verfahrensschritt b, demgemäß das RVE auf der Bauplatte 20m platziert wird. Hierdurch wird die Ausrichtung des RVE anhand der Oberfläche der horizontal ausgerichteten Bauplatte 20m definiert. Die Bauplatte 20m stellt dabei ein imaginäres Abbild (Modell) der Bauplatte 20 der Fertigungsanlage zum additiven Fertigen dar.

In einem nächsten Verfahrensschritt c wird im Programmmodul C die Operation des sogenannten Slicen und Hatchen durchgeführt. Beim Slicen wird das RVE in die zu herzustellenden Lagen 25 unterteilt. Beim Hatchen wird der Werkzeugpfad festgelegt, wobei hierbei standardisierte Verfahrensparameter PAR zu Grunde gelegt wurden. Zur Auswahl der standardisierten Verfahrensparameter PAR ist auch das verwendete Material MAT, aus dem das Pulver besteht, zu berücksichtigen.

Im Programmmodul E kann nun der Verfahrensschritt e durchgeführt werden, demgemäß eine mesoskalige Simulation SIM meso durchgeführt wird. Hierbei wird eine Referenztemperatur $T_r$ berücksichtigt, die das Temperaturniveau beschreibt, auf dem sich das RVE bei der simulierten Herstellung der aktuellen Lage befindet. Die mesoskalige Simulation ermöglicht es, auch die Größe eines Schmelzbads 32 (vgl. Figur 3) zu beurteilen. Verlässt die Schmelzbadgröße dieses Intervall nicht, so kann der gewählte Satz von Verfahrensparametern PAR in einem Schritt f in der Speichereinheit F also eine Regel RULE für das betreffende Verfahren abgelegt werden. Verlässt jedoch die Schmelzbadgröße das erlaubte Intervall, so muss ein Modifikationsschritt m mit veränderten Verfahrensparametern PAR durchgeführt werden. Mit diesem wird wieder in den Programmschritt c eingestiegen und das Verfahren erneut im Programmschritt e der mesoskaligen Simulation unterzogen. Diese Schritte werden wiederholt, bis die Schmelzbadgröße des Schmelzbads 32 im zulässigen Intervall liegt.

Für das gerechnete RVE muss außerdem das Massenintegral M berechnet werden, welches für die Vektoren 30 eines Werkzeugpfads 31 gilt. Hierzu wird ein Integrationsvolumen V gemäß Figur 3 berücksichtigt, welches im Schnitt eines der Vektoren 30 eingezeichnet ist. Dieses weist die Form eines Ellipsoids auf, deren Radius $\delta r$ in einer x-y-Ebene auf der Oberfläche RVE und einer Tiefe z in z-Richtung aufweist. Das Massenintegral M wird gemeinsam mit den zugehörigen für den betrachteten Vektor gültigen Verfahrensparametern PAR in der Regeldatenbank RULE der Speichereinheit F abgelegt.

Für die Berechnung des Massenintegrals M sowie des Verfahrens des Schritts der Modifikation der Verfahrensparameter PAR im Verfahrensschritt m kann ein Korrekturmodul COR gemäß Figur 1 Verwendung finden. Hierbei handelt es sich um ein Programmmodul, welches die Modifikation von Daten nach bestimmten Regeln durchführen kann.

Wird nun ein bestimmtes Bauteil 19m gemäß Figur 4 für eine Fertigung vorbereitet, kann die Hardware- und Softwareumgebung gemäß Figur 1 ebenfalls genutzt werden. Das Bauteil 19m ist ein Modell des herzustellenden Bauteils 19 gemäß Figur 1, wobei dieses Modell im Verfahrensschritt a durch das Programmmodul A erstellt werden kann. Das anschließende Platzieren im Verfahrensschritt b durch das Programmmodul B und das Slicen und Hatchen im Verfahrensschritt c durch das Programmmodul C erfolgt wie zu Figur 2 bei den RVE beschrieben, daher wird dieser Vorgang an dieser Stelle nicht noch einmal gesondert erläutert.

Im Verfahrensschritt c werden zunächst standardisierte Parameter PAR verwendet, die in Abhängigkeit vom einzusetzenden Material MAT ausgewählt wurden. Abhängig von den gewählten Verfahrensparametern PAR, die den Energieeintrag in die Baustruktur 19m beeinflussen, kann anschließend in einem Verfahrensschritt d durch ein Programmmodul D eine makroskalige Simulation SIMmacro durchgeführt werden. Hierbei wird die Temperaturentwicklung in der gesamten hergestellten Baustruktur simuliert, wodurch es möglich wird, die in der herzustellenden Lage 25 herrschende Temperatur $T_g$ zu berechnen. Bei der makroskaligen Simulation kann als Grundlage entweder die platzierte Baustruktur 19m gemäß dem Verfahrensschritt b oder die bereits geslicete Baustruktur 19m gemäß dem Verfahrensschritt c ausgewählt werden.

In Abhängigkeit der gewählten Prozessparameter PAR, also auch des Verlaufes der Vektoren 30 im Werkzeugpfad 31 und den Lagen 25 des gesliceten Modells 19m kann nun ein Massenintegral für die einzelnen Vektoren berechnet werden. Dies erfolgt im Verfahrensschritt g durch das Korrekturmodul G. Nachdem das Massenintegral M bekannt ist, kann in dem Verfahrensschritt g aus der Regeldatenbank F ein Satz an korrigierten Verfahrensparametern $PAR_1$ ausgewählt werden, wobei aufgrund der Übereinstimmung der Massenintegrale aus der Datenbank bzw. des herzustellenden Bauteils der modifizierte Satz an Verfahrensparametern in einem Schritt h der Steuereinrichtung H zur Verfügung gestellt werden kann. Mit dieser lässt sich das Bauteil dann herstellen.

Es kann mit einer Scangeschwindigkeit des Laserstrahls von mindestens 500 mm/s und höchstens 2000 mm/s, bevorzugt von mindestens 800 mm/s und höchstens 1200 mm/s, mit einer Laserleistung von mindestens 125 W und höchstens 250W, bevorzugt von mindestens 150 W und höchstens 250 W, mit einem Spurabstand von mindestens 60 und höchstens 130 μm, bevorzugt von mindestens 80 und höchstens 120 μm und mit einer Schichtdicke der Pulverlagen von mindestens 20 μm und höchstens 50 μm gearbeitet werden.

Zum Laserschmelzen kann ein Pulver mit Korngrößen von mindestens 10 μm und höchstens 45 μm verwendet werden, wobei eine Größenverteilung D50 (d.h. 50 % der Partikel sind kleiner als dieser Wert) mindestens 17 μm und höchstens 27 μm beträgt. Pulver mit einer derartigen Größenverteilung lassen sich vorteilhaft gut mit pulverbettbasierten additiven Fertigungsverfahren herstellen, da diese sich zuverlässig im Pulverbett dosieren lassen.

## Patentansprüche

1. Verfahren zum Bestimmen von eine Prozessführung (PAR) beschreibenden Bauvorschriften zur additiven Herstellung einer Baustruktur (19) auf der Grundlage einer Simulation der Herstellung der Baustruktur (19), wobei für die Simulation

   • ein Fertigungsdatensatz für die Baustruktur (19), der die Baustruktur (19) in herzustellenden Lagen (25) beschreibt, zur Verfügung gestellt wird,
   • eine globale Wärmeentwicklung in bereits hergestellten Lagen (25) der Baustruktur (19) unter Berücksichtigung einer Bauhistorie der Baustruktur (19) und des Wärmeeintrags durch einen Energiestrahl (17) berechnet wird,
   • die lokale Wärmeentwicklung in der Umgebung des Wärmeeintrags durch den Energiestrahl (17) bestimmt wird,
   • die Prozessführung (PAR) unter Berücksichtigung der globalen Wärmeentwicklung und der lokalen Wärmeentwicklung bestimmt wird,
   • in Abhängigkeit der globalen Wärmeentwicklung und der lokalen Wärmeentwicklung aus einer Datenbank (RULE) Korrekturmaßnahmen der Prozessführung (PAR) geladen werden,
   • die Korrekturmaßnahmen der Prozessführung (PAR) lokal einzelnen Vektoren (30) eines Werkzeugpfades (31) des Energiestrahls (17) zugeordnet werden, wobei
   • für einzelne Vektoren (30) des Werkzeugpfades (31) mindestens ein Massenintegral berechnet wird und
   • geeignete Korrekturmaßnahmen auf Basis eines Vergleichs des berechneten Massenintegrals mit in der Datenbank (RULE) gespeicherten Massenintegralen bestimmt werden und
   • schließlich ein modifizierter Satz an Verfahrensparametern in einem Schritt (h) der Steuereinrichtung (H) zur Verfügung gestellt wird.

2. Verfahren nach Anspruch 1, wobei die Korrekturmaßnahmen der Prozessführung (PAR) derart bestimmt werden, dass ein durch den Energiestrahl (17) erzeugtes Schmelzbad (32) eine Größe aufweist, die in einem festgelegten Intervall liegt.

3. Verfahren nach einem der voranstehenden Ansprüche, wobei für einzelne Vektoren (30) des Werkzeugpfades (31) mindestens ein Massenintegral berechnet wird,

   • wobei über ein definiertes Integrationsvolumen integriert wird,
   • wobei das Integrationsvolumen einen Teil der dem Energiestrahl (17) zugewandten Oberfläche der Baustruktur enthält,
   • wobei ein Punkt des betrachteten Vektors (30) in dem Integrationsvolumen liegt.

4. Verfahren nach Anspruch 3,
   wobei für die Vektoren (30) zumindest ein Massenintegral am Anfang und ein Massenintegral am Ende des Vektors berechnet werden.

5. Verfahren nach Anspruch 4,
   wobei von den je Vektor (30) berechneten Massenintegralen für den Vektor dasjenige ausgewählt wird, welches den geringsten Wert hat.

6. Verfahren nach Anspruch 4,
   wobei aus den je Vektor (30) berechneten Massenintegralen ein Wert berechnet wird, der dem Mittelwert der Massenintegrale entspricht.

7. Verfahren nach einem der Ansprüche 3 bis 6,
   wobei zur Bestimmung der Korrekturmaßnahmen für einen betrachteten Vektor (30)

   • das berechnete Massenintegral mit in der Datenbank (RULE) gespeicherten Massenintegralen verglichen wird,
   • dasjenige gespeicherte Massenintegral aus der Datenbank ausgewählt wird, welches dem berechneten Massenintegral am ähnlichsten ist,
   • die mit dem ausgewählten Massenintegral abgespeicherten Korrekturmaßnahmen der Prozessführung (PAR) für den betrachteten Vektor ausgewählt werden.

8. Verfahren nach einem der Ansprüche 3 bis 6,
   wobei zur Bestimmung der Korrekturmaßnahmen (PAR) in Form von Korrekturwerten für einen betrachteten Vektor (30)

   • das berechnete Massenintegral mit in einer Datenbank (RULE) gespeicherten Massenintegralen verglichen wird,
   • diejenigen gespeicherten Massenintegrale aus der Datenbank ausgewählt werden, welche dem berechneten Massenintegral am ähnlichsten sind,
   • die mit den ausgewählten Massenintegralen abgespeicherten Korrekturwerte für Prozessparameter der Prozessführung (PAR) für den betrachteten Vektor (30) ausgewählt werden und eine Interpolation dieser Korrekturwerte durchgeführt wird, wobei das Ergebnis der Interpolation als resultierender Korrekturwert für die Korrektur verwendet wird.

9. Verfahren nach einem der Ansprüche 3 bis 7,
   wobei das Massenintegral die Gestalt eines Ellipsoids oder eines Halbellipsoids mit einer Halbachse $\delta r$ in der x-y-Ebene der herzustellenden Lage und $\delta z$ in z-Richtung hat.

10. Verfahren nach einem der voranstehenden Ansprüche,
    wobei die Korrekturmaßnahmen eine Verringerung der Leistung des Energiestrahls und/oder eine Verlängerung der Pausenzeiten zwischen den Bestrahlungszeiten einzelner Vektoren (30) und/oder eine Vergrößerung der Verfahrgeschwindigkeit der Energiestrahls (17) und/oder eine Vergrößerung des Hatch-Abstandes zwischen den Vektoren (39) und/oder eine Veränderung der Vektorreihenfolge und/oder eine Veränderung der Vektorlänge und/oder eine Veränderung der Vektorausrichtung beinhalten.

11. Verfahren nach einem der vorangehenden Ansprüche, bei dem Korrekturmaßnahmen für eine Prozessführung (PAR) beschreibende Bauvorschriften auf der Grundlage einer Simulation bestimmt werden, wobei für die Simulation

    • Prozessparameter für die Prozessführung festgelegt werden,
    • ein Fertigungsdatensatz für die Baustruktur, der die Baustruktur (19) in herzustellenden Lagen (25) beschreibt, zur Verfügung gestellt wird,
    • eine globale Wärmeentwicklung in Form einer Referenztemperatur $T_r$ berücksichtigt wird,
    • die lokale Wärmeentwicklung in der Umgebung des Wärmeeintrags durch einen Energiestrahl (17) berechnet wird,
    • die lokale Wärmeentwicklung in der Umgebung des Wärmeeintrags durch den Energiestrahl (17) für repräsentative Volumenelemente (RVE) mit vorgegebener Geometrie berechnet wird,
    • im Falle einer zu großen berechneten Wärmeentwicklung Korrekturmaßnahmen der Prozessführung lokal einzelnen Vektoren (30) eines Werkzeugpfades (31) des Energiestrahls zugeordnet werden,

• ein Massenintegral über ein Teilvolumen des repräsentativen Volumenelementes (RVE), in dem die Korrekturmaßnahmen erforderlich sind, berechnet wird,
• die Korrekturmaßnahmen mit dem zugehörigen Massenintegral in einer Datenbank (RULE) abgespeichert werden.

12. Verfahren nach Anspruch 11, wobei die repräsentativen Volumenelemente (RVE) die Form von

• Quadern, insbesondere Würfeln und/oder
• Prismen mit zwei parallel sich zu den Lagen (25) erstreckenden Mantelflächen und mindesten einer geneigt zu den Lagen verlaufenden und die parallelen Mantelflächen verbindende Mantelfläche und/oder
• Dreiecksprismen mit einer zu den Lagen (25) parallel verlaufenden Mantelfläche aufweisen.

13. Verfahren nach einem der Ansprüche 11 oder 12, wobei ein repräsentatives Volumenelement (RVE), welches insbesondere quaderförmig ist, dessen Umrandung rundherum von dem Material der Baustruktur (19) umgeben ist, verwendet wird, um für die Prozessführung Referenzwerte zu ermitteln, wobei die Korrekturparameter auf eine Verringerung des Energieeintrags durch den Energiestrahl (17) zielen.

14. Verfahren nach einem der Ansprüche 11 bis 13, wobei zur Berechnung einer Schmelzbadgröße das Massenintegral über ein Teilvolumen des repräsentativen Volumenelementes (RVE) berechnet wird,

• welches einen Teil der dem Energiestrahl (17) zugewandten Oberfläche des repräsentativen Volumenelementes (RVE) enthält,
• welches auf mehreren Punkten des Werkzeugpfades (31) lokalisiert wird, wobei für diese Punkte die Schmelzbadgröße unter Berücksichtigung der lokalen Wärmeentwicklung und der Referenztemperatur $T_r$ berechnet wird.

15. Verfahren nach einem der Ansprüche 11 bis 14, wobei das Massenintegral die Gestalt eines Ellipsoids oder eines Halbellipsoids mit einer Halbachse $\delta r$ in der x-y-Ebene der herzustellenden Lage und $\delta z$ in z-Richtung hat.

16. Computerprogrammprodukt mit Programmbefehlen für eine Fertigungsanlage, die mittels der Programmbefehle konfiguriert wird, das Werkstück nach einem der vorangehenden Ansprüche zu erzeugen.

## Claims

1. Method for determining building specifications describing process control (PAR) for the additive manufacturing of a building structure (19) on the basis of a simulation of the manufacture of the building structure (19), wherein for the simulation

• a manufacturing data set for the building structure (19), said manufacturing data set describing the building structure (19) in layers (25) to be manufactured, is made available,
• a global heat development in already manufactured layers (25) of the building structure (19) taking account of a building history of the building structure (19) and the heat input by an energy beam (17) is calculated,
• the local heat development in the vicinity of the heat input by the energy beam (17) is determined,
• the process control (PAR) is determined taking account of the global heat development and the local heat development,
• correction measures of the process control (PAR) are loaded from a database (RULE) depending on the global heat development and the local heat development,
• the correction measures of the process control (PAR) are assigned locally to individual vectors (30) of a tool path (31) of the energy beam (17), wherein
• at least one mass integral is calculated for individual vectors (30) of the tool path (31), and
• suitable correction measures are determined on the basis of a comparison of the calculated mass integral with mass integrals stored in the database (RULE), and
• finally a modified set of method parameters is made available to the control device (H) in a step (h).

2. Method according to Claim 1, wherein the correction measures of the process control (PAR) are determined in such a way that a melt pool (32) produced by the energy beam (17) has a size that is in a defined interval.

3. Method according to either of the preceding claims, wherein at least one mass integral is calculated for individual vectors (30) of the tool path (31),

• wherein integration is effected over a defined integration volume,
• wherein the integration volume contains a part of the surface of the building structure facing the energy beam (17),
• wherein a point of the vector (30) considered lies in the integration volume.

**4.** Method according to Claim 3,
wherein at least one mass integral at the beginning and one mass integral at the end of the vector are calculated for the vectors (30).

**5.** Method according to Claim 4,
wherein, from the mass integrals calculated per vector (30), that mass integral which has the lowest value is selected for the vector.

**6.** Method according to Claim 4,
wherein a value corresponding to the mean value of the mass integrals is calculated from the mass integrals calculated per vector (30).

**7.** Method according to any of Claims 3 to 6,
wherein in order to determine the correction measures for a vector (30) considered

• the calculated mass integral is compared with mass integrals stored in the database (RULE),
• that stored mass integral which is the most similar to the calculated mass integral is selected from the database,
• the correction measures of the process control (PAR) stored with the selected mass integral are selected for the vector considered.

**8.** Method according to any of Claims 3 to 6,
wherein in order to determine the correction measures (PAR) in the form of correction values for a vector (30) considered

• the calculated mass integral is compared with mass integrals stored in a database (RULE),
• those stored mass integrals which are the most similar to the calculated mass integral are selected from the database,
• the correction values for process parameters of the process control (PAR) stored with the selected mass integrals are selected for the vector (30) considered and an interpolation of said correction values is carried out, wherein the result of the interpolation is used as a resulting correction value for the correction.

**9.** Method according to any of Claims 3 to 7,
wherein the mass integral has the shape of an ellipsoid or of a semi-ellipsoid having a semi-axis $\delta r$ in the x-y-plane of the layer to be manufactured and $\delta z$ in the z-direction.

**10.** Method according to any of the preceding claims,
wherein the correction measures include a reduction of the power of the energy beam and/or a lengthening of the pause times between the irradiation times of individual vectors (30) and/or an increase of the movement speed of the energy beam (17) and/or an increase of the hatch distance between the vectors (39) and/or an alteration of the vector order and/or an alteration of the vector length and/or an alteration of the vector orientation.

**11.** Method according to any of the preceding claims, in which correction measures for building specifications describing process control (PAR) are determined on the basis of a simulation, wherein for the simulation

• process parameters for the process control are defined,
• a manufacturing data set for the building structure, said manufacturing data set describing the building structure (19) in layers (25) to be manufactured, is made available,
• a global heat development in the form of a reference temperature $T_r$ is taken into account,
• the local heat development in the vicinity of the heat input by an energy beam (17) is calculated,
• the local heat development in the vicinity of the heat input by the energy beam (17) is calculated for representative volume elements (RVE) with a predefined geometry,
• in the case of a calculated heat development that is excessively high, correction measures of the process control are assigned locally to individual vectors (30) of a tool path (31) of the energy beam,
• a mass integral over a partial volume of the representative volume element (RVE) in which the correction measures are required is calculated,
• the correction measures are stored with the associated mass integral in a database (RULE).

**12.** Method according to Claim 11,
wherein the representative volume elements (RVE) have the shape of

• parallelepipeds, in particular cubes, and/or
• prisms having two lateral surfaces extending parallel to the layers (25) and at least one lateral surface extending at an inclination to the layers and connecting the parallel lateral surfaces, and/or
• triangular prisms having a lateral surface extending parallel to the layers (25).

**13.** Method according to either of Claims 11 and 12,
wherein a representative volume element (RVE) which is parallelepipedal, in particular, the boundary of which is surrounded all around by the material of the building structure (19), is used to ascertain reference values for the process control, wherein the correction parameters aim to reduce the energy input by the energy beam (17).

**14.** Method according to any of Claims 11 to 13, wherein a melt pool size is calculated by calculating the mass integral over a partial volume of the representative volume element (RVE),

   • which contains a part of the surface of the representative volume element (RVE) facing the energy beam (17),
   • which is localized on a plurality of points of the tool path (31), wherein for said points the melt pool size is calculated taking account of the local heat development and the reference temperature $T_r$.

**15.** Method according to any of Claims 11 to 14, wherein the mass integral has the shape of an ellipsoid or of a semi-ellipsoid having a semi-axis $\delta r$ in the x-y-plane of the layer to be manufactured and $\delta z$ in the z-direction.

**16.** Computer program product comprising program instructions for a manufacturing installation which is configured by means of the program instructions to produce the workpiece according to any of the preceding claims.

**Revendications**

**1.** Procédé de détermination de règles décrivant une conduite (PAR) de processus pour la fabrication additive d'une structure (19) de construction sur la base d'une simulation de la fabrication de la structure (19) de construction, dans lequel, pour la simulation,

   • on se procure un ensemble de données de la fabrication de la structure (19) de construction, qui décrit la structure (19) de construction en des couches (25) à produire,
   • on calcule un dégagement global de chaleur dans des couches (25) déjà produites de la structure (19) de construction, en tenant compte d'un historique de construction de la structure (19) de construction et de l'apport de chaleur par un faisceau (17) d'énergie,
   • on détermine le dégagement local de chaleur dans l'environnement de l'apport de chaleur par le faisceau (17) d'énergie,
   • on détermine la conduite (PAR) du processus en tenant compte du dégagement global de chaleur et du dégagement local de chaleur,
   • en fonction du dégagement global de chaleur et du dégagement local de chaleur, on charge, dans une base (RULE) de données, des mesures de correction de la conduite (PAR) du processus,
   • on affecte les mesures de correction de la conduite (PAR) du processus à des vecteurs (30) individuels localement d'un chemin (31) d'outil du faisceau (17) d'énergie, dans lequel
   • pour divers vecteurs (30) du chemin (31) d'outil, on calcule au moins une intégrale de masse, et
   • on détermine les mesures de correction appropriées sur la base d'une comparaison entre l'intégrale de masse calculée et des intégrales de masse mises en mémoire dans la base (RULE) de données, et
   • finalement, on dispose d'un ensemble modifié de paramètres de procédé dans un stade (h) du dispositif (H) de commande.

**2.** Procédé suivant la revendication 1, dans lequel on détermine les mesures de correction de la conduite (PAR) du processus, de manière à ce qu'un bain (32) fondu produit par le faisceau (17) d'énergie ait une dimension, qui est dans un intervalle fixé.

**3.** Procédé suivant l'une des revendications précédentes, dans lequel on calcule, pour les divers vecteurs (30) du chemin (31) de l'outil, au moins une intégrale de masse,

   • dans lequel on intègre sur un volume d'intégration défini,
   • dans lequel le volume d'intégration contient une partie de la surface, tournée vers le faisceau (17) d'énergie, de la structure de construction,
   • dans lequel un point du vecteur (30) considéré est dans le volume d'intégration.

**4.** Procédé suivant la revendication 3, dans lequel, pour les vecteurs (30), on calcule au moins une intégrale de masse au début et une intégrale de masse à la fin du vecteur.

**5.** Procédé suivant la revendication 4, dans lequel on choisit, pour le vecteur, parmi les intégrales de masse calculées pour le vecteur (30), celle qui a la valeur la plus petite.

**6.** Procédé suivant la revendication 4, dans lequel on calcule, à partir des intégrales de masse calculées pour chaque vecteur (30), une valeur qui correspond à la valeur moyenne des intégrales de masse.

**7.** Procédé suivant l'une des revendications 3 à 6, dans lequel, pour la détermination des valeurs de correction, pour un vecteur (30) considéré,

   • on compare l'intégrale de masse calculée à des intégrales de masse mises en mémoire dans la base (RULE) de données,
   • on choisit, dans la base de données, l'intégrale de masse mise en mémoire, qui est la plus proche de l'intégrale de masse calculée,
• on choisit, pour le vecteur considéré, les mesures de correction de la conduite (PAR) du processus mises en mémoire avec l'intégrale de masse choisie.

8. Procédé suivant l'une des revendications 3 à 6, dans lequel, pour la détermination des mesures (PAR) de correction sous la forme de valeurs de correction, pour un vecteur (30) considéré,

   • on compare l'intégrale de masse calculée à des intégrales de masse mises en mémoire dans une base (RULE) de données,
   • on choisit, dans la base de données, l'intégrale de masse mise en mémoire, qui est la plus semblable à l'intégrale de masse calculée,
   • on choisit, pour le vecteur (30) considéré, les valeurs de correction, mises en mémoire avec les intégrales de masse choisies, des paramètres de la conduite (PAR) du processus et on effectue une interpolation de ces valeurs de correction, dans lequel on utilise, pour la correction, le résultat de l'interposition comme valeur de correction résultante.

9. Procédé suivant l'une des revendications 3 à 7, dans lequel l'intégrale de masse a la conformation d'un ellipsoïde ou d'un demi-ellipsoïde ayant un demi-axe $\delta r$ dans le plan x-y dans la couche à produire et $\delta z$ dans la direction z.

10. Procédé suivant l'une des revendications précédentes,
    dans lequel les mesures de correction contiennent une diminution de la puissance du faisceau d'énergie et/ou un allongement des temps de pause entre les temps de rayonnement des divers vecteurs (30) et/ou une augmentation de la vitesse de déplacement du faisceau (17) d'énergie et/ou un agrandissement de la distance de Hatch entre les vecteurs (39) et/ou une modification de la succession des vecteurs et/ou une modification de la longueur de vecteurs et/ou une modification de la direction des vecteurs.

11. Procédé suivant l'une des revendications précédentes, dans lequel on détermine des règles de construction décrivant des mesures de correction d'une conduite (PAR) de processus sur la base d'une simulation, dans lequel, pour la simulation,

    • on établit des paramètres de processus pour la conduite de processus,
    • on se procure un ensemble de données de fabrication de la structure de construction, qui décrit la structure (19) de construction en des couches (25) à produire,
• on prend en compte un dégagement global de chaleur sous la forme d'une température $T_\tau$ de référence,
• on calcule le dégagement local de chaleur dans l'environnement de l'apport de chaleur par un faisceau (17) d'énergie,
• on calcule le dégagement local de chaleur dans l'environnement de l'apport de chaleur par le faisceau (17) d'énergie pour des éléments (RVE) représentatifs du volume d'une géométrie donnée à l'avance,
• dans le cas d'un dégagement de chaleur calculé trop grand, on associe, à des mesures de correction de la conduite du processus, des vecteurs (30) individuels localement d'un chemin (31) d'outil du faisceau d'énergie,
• on calcule une intégrale de masse sur un volume partiel de l'élément (RVE) de volume représentatif, dans lequel les mesures de correction sont nécessaires,
• on met les mesures de correction en mémoire avec l'intégrale de masse, qui leur appartient, dans une base (RULE) de données.

12. Procédé suivant la revendication 11, dans lequel les éléments (RVE) de volume représentatifs ont la forme

    • de parallélépipèdes, en particulier de dés, et/ou
    • de prismes ayant deux surfaces latérales s'étendant parallèlement aux couches (25) et au moins une surface latérale s'étendant de manière inclinée par rapport aux couches et reliant des surfaces latérales parallèles et/ou
    • de prismes en triangle ayant une surface latérale s'étendant parallèlement aux couches (25).

13. Procédé suivant la revendication 11 ou 12, dans lequel on utilise, pour déterminer des valeurs de référence pour la conduite du processus, un élément (RVE) de volume représentatif, qui est en particulier parallélépipédique, dont la bordure est entourée par le matériau de la structure (19) de construction, afin de déterminer des valeurs de référence pour la conduite du processus, dans lequel les paramètres de correction visent à une diminution de l'apport d'énergie par le faisceau (17) d'énergie.

14. Procédé suivant l'une des revendications 11 à 13, dans lequel, pour le calcul d'une dimension d'un bain fondu, on calcule l'intégrale de masse sur un volume partiel de l'élément (RVE) de volume représentatif,

    • qui contient une partie de la surface de l'élément (RVE) de volume représentatif, tournée vers le faisceau (17) d'énergie,

• qui est localisé sur plusieurs points du trajet (31) de l'outil, dans lequel, pour ces points, on calcule la dimension du bain fondu en tenant compte du dégagement local de chaleur et de la température $T_\tau$ de référence.

15. Procédé suivant l'une des revendications 11 à 14, dans lequel l'intégrale de masse a la conformation d'un ellipsoïde ou d'un demi-ellipsoïde ayant un demi-axe $\delta r$ dans le plan x-y dans la couche à produire et $\delta z$ dans la direction z.

16. Produit de programme d'ordinateur, comprenant des instructions de programme pour une installation de fabrication, qui est configurée au moyen d'instructions de programme, pour produire la pièce suivant l'une des revendications précédentes.

FIG 1

FIG 2

FIG 3

# FIG 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2017174160 A1